# EUROPEAN PATENT APPLICATION

(11) **EP 3 072 747 A2**
(43) Date of publication of application: **28.09.2016**
(21) Application number: 16000618.5
(22) Date of filing: 15.03.2016
(51) Int. Cl.: B60R 16/02

(54) **PROTECTOR, ASSEMBLY OF WIRING MODULE WITH PROTECTOR AND ASSEMBLING METHOD THEREFOR**

(30) Priority: 26.03.2015 JP 2015064162
(71) Applicant: Sumitomo Wiring Systems, Ltd., Yokkaichi City Mie 510 (JP)
(72) Inventor: Fujita, Tetsuya, Yokkaichi-City, MIE, 510-8503 (JP); Arai, Kaho, Yokkaichi-City, MIE, 510-8503 (JP)
(74) Representative: Müller-Boré & Partner Patentanwälte PartG mbB

(57) **Abstract**

It is aimed to close clearances formed at side wall portions at a position corresponding to a hinge portion when a protector main body is provided with the hinge portion.

A protector 20 includes a protector main body portion 22 and a lid portion (e.g. outer lid portion 40). The protector main body portion 22 including a bottom plate portion 24 having a main body side hinge portion 27 and a pair of first side wall portions 30 and a pair of second side wall portions 32 projecting on opposite side parts of the bottom plate portion 24. The lid portion includes, for example, a lid main body portion 41 and a pair of auxiliary side wall portions 48. The lid main body portion 41 is provided with a lid side hinge portion 46 and a specified bent shape part 45. The bent shape part 45 is arranged at a position corresponding to the main body side hinge portion 27 and the lid side hinge portion 46 is arranged at a position displaced form the main body side hinge portion 27. A pair of auxiliary side wall portions 48 are arranged on opposite side parts of the bent shape part 45 to close clearances formed between the first side wall portions 30 and the second side wall portions 32.

## Description

The present invention relates to a protector for covering a wiring material, to an assembly of wiring module and protector as well as to an assembly method therefor.

Japanese Unexamined Patent Publication No. 2001-57720 discloses a protector for covering a U-turn portion of a harness. In Japanese Unexamined Patent Publication No. 2001-57720, the protector is composed of a protector main body and a lid cover. The protector main body is composed of a base for taking in and guiding the harness, a reversing potion bent from the tip of the base to guide the U-turn portion, and the like. The lid cover is composed of a main lid portion for closing the entire protector main body and a movable lid rotatable in a direction to close the reversing portion via a thin hinge portion on the tip of this main lid portion.

As disclosed in Japanese Unexamined Patent Publication No. 2001-57720, in manufacturing a protector including a bent portion, it is desired in some cases to provide a hinge portion on the bent portion of the protector main body due to mold removal. If being provided with the hinge portion, the protector main body can be molded in a state close to a linear state. Thus, mold removal is easily performed. Further, by bending the hinge portion after molding, the bent portion can be formed.

However, if the protector main body is provided with the hinge portion, clearances are formed at side walls at a position corresponding to the hinge portion.

Accordingly, the present invention aims to close clearances formed at side wall portions at a position corresponding to a hinge portion when a protector main body is provided with the hinge portion.

This object is solved according to the invention by the features of the independent claims. Particular embodiments of the invention are subject of the dependent claims.

According to an aspect of the invention, there is provided a protector which includes a protector main body portion including a base (particularly bottom) plate portion having a first base (particularly bottom) plate portion and a second base (particularly bottom) plate portion coupled via a main body side hinge portion, a pair of first side wall portions substantially projecting at least toward one principal surface side of the first base (particularly bottom) plate portion on substantially opposite side parts of the first base (particularly bottom) plate portion and a pair of second side wall portions separated from the pair of first side wall portions and substantially projecting in the substantially same projecting direction as the first side wall portions on substantially opposite side parts of the second base (particularly bottom) plate portion, and at least one lid portion including a lid main body portion having a first lid main body portion and a second lid main body portion coupled via a lid side hinge portion and configured to at least partly close an opening between the pair of first side wall portions and an opening between the pair of second side wall portions, wherein the main body side hinge portion and the lid side hinge portion are provided at positions displaced in an extending direction of the base (particularly bottom) plate portion with the protector main body portion and/or the lid portion united, a specified bent shape part is formed at a position of one of the base (particularly bottom) plate portion and the lid main body portion corresponding to the main body side hinge portion or the lid side hinge portion provided on the other of the base (particularly bottom) plate portion and the lid main body portion, and a pair of auxiliary side wall portions configured to at least partly close clearances formed between the pair of first side wall portions and the pair of second side wall portions are provided on substantially opposite side parts of the lid main body portion.

Accordingly, the base (particularly bottom) plate portion of the protector main body portion is so configured that the first and second base (particularly bottom) plate portions are coupled via the main body side hinge portion. Thus, the pair of first side wall portions on the substantially opposite side parts of the first base (particularly bottom) plate portion and the pair of second side wall portions of the second base (particularly bottom) plate portion are separated and clearances are formed between the both. On the other hand, the lid main body portion of the lid portion is so configured that the first and second lid main body portions are coupled via the lid side hinge portion, but the main body side hinge portion and the lid side hinge portion are provided at the positions displaced in the extending direction of the base (particularly bottom) plate portion with the protector main body portion and/or the lid portion united. The specified bent shape part is formed at the position of one of the base (particularly bottom) plate portion and the lid main body portion corresponding to the main body side hinge portion or the lid side hinge portion provided on the other of the base (particularly bottom) plate portion and the lid main body portion, and the pair of auxiliary side wall portions for closing the clearances formed between the pair of first side wall portions and the pair of second side wall portions are formed on the substantially opposite side parts of the lid main body portion. Thus, the clearances formed between the pair of first side wall portions and the pair of second side wall portions can be at least partly closed by the pair of auxiliary side wall portions. In this way, the clearances formed at the side wall portions at the position corresponding to the main body side hinge portion can be at least partly closed when the protector main body portion is provided with the main body side hinge portion.

According to a particular embodiment, the lid main body portion is provided to at least partly close the opening between the pair of first side wall portions and the opening between the pair of second side wall portions at a position distant from the base (particularly bottom) plate portion in a state where the bent shape part is provided on the second lid main body portion and arranged at a position corresponding to the main body side hinge portion and the lid side hinge portion is arranged at a position displaced from the main body side hinge portion, and the pair of auxiliary side wall portions are provided on substantially opposite side parts of the bent shape part and at least partly close the clearances formed between the pair of first side wall portions and the pair of second side wall portions with the base (particularly bottom) plate portion bent via the main body side hinge portion.

Accordingly, the pair of auxiliary side wall portions are provided on the substantially opposite side parts of the bent shape part and the clearances formed between the pair of first side wall portions and the pair of second side wall portions can be at least partly closed by these auxiliary side wall portions. In this way, the clearances formed at the side wall portions at the position corresponding to the main body side hinge portion can be at least partly closed when the protector main body portion is provided with the main body side hinge portion.

Particularly, the pair of first side wall portions and the pair of second side wall portions include parts substantially projecting outwardly with the base (particularly bottom) plate portion bent at the hinge portion, and the auxiliary side wall portions are formed to substantially project toward inner corner sides of the substantially opposite side parts of the bent shape part.

When the pair of first side wall portions and the pair of second side wall portions include the substantially outwardly projecting parts with the base (particularly bottom) plate portion bent at the hinge portion as according to the third aspect, relatively large clearances are formed between the pair of first side wall portions and the pair of second side wall portions. Such relatively large clearances can be at least partly closed by the auxiliary side wall portions formed to substantially project toward the inner corner sides of the substantially opposite side parts of the bent shape part.

Further particularly, the pair of first side wall portions and the pair of second side wall portions include parts substantially projecting inwardly with the base (particularly bottom) plate portion bent at the hinge portion, and the auxiliary side wall portions are formed to substantially project toward outer corner sides of the substantially opposite side parts of the bent shape part.

Also when the pair of first side wall portions and the pair of second side wall portions include the substantially inwardly projecting parts with the base (particularly bottom) plate portion bent at the hinge portion as according to the fourth aspect, clearances are formed between the pair of first side wall portions and the pair of second side wall portions. Such clearances can be at least partly closed by the auxiliary side wall portions formed to substantially project toward the outer corner sides of the substantially opposite side parts of the bent shape part.

Further particularly, the pair of first side wall portions and the pair of second side wall portions include substantially inwardly projecting parts and substantially outwardly projecting parts with the base (particularly bottom) plate portion bent at the hinge portion, the lid portion includes an outer lid portion to be arranged on an outer side of the protector main body portion and/or an inner lid portion to be arranged on an inner side of the protector main body portion, the auxiliary side wall portions of the outer lid portion are formed to substantially project toward inner corner sides of the substantially opposite side parts of the bent shape part, and the auxiliary side wall portions of the inner lid portion are formed to substantially project toward outer corner sides of the substantially opposite side parts of the bent shape part.

Accordingly, wiring materials can be accommodated on inner and outer sides of the protector main body portion. In this case, clearances formed between the pair of first side wall portions and the pair of second side wall portions can be at least partly closed by the auxiliary side wall portions on each of the inner and outer sides of the protector main body portion.

According to a further aspect of the invention, there is provided an assembly of a wiring module with a protector which includes a protector according to the above aspect of the invention or a particular embodiment thereof, and at least one bare conductor at least partly accommodated in a space enclosed by the base (particularly bottom) plate portion, the pair of first side wall portions and the pair of second side wall portions and the lid portion.

Accordingly, the bare conductor can be at least partly accommodated in the protector while being least exposed to outside.

According to a further aspect of the invention, there is provided a method of assembling a wiring module with a protector (i.e. of producing an assembly of wiring module and protector), comprising: providing a protector according to the above aspect of the invention or a particular embodiment thereof, and at least partly accommodating at least one bare conductor in a space enclosed by the base plate portion, the pair of first side wall portions and the pair of second side wall portions and the lid portion. According to the above, the base (particularly bottom) plate portion of the protector main body portion is so configured that the first and second base (particularly bottom) plate portions are coupled via the main body side hinge portion. Thus, the pair of first side wall portions on the substantially opposite side parts of the first base (particularly bottom) plate portion and the pair of second side wall portions of the second base (particularly bottom) plate portion are separated and clearances are formed between the both. On the other hand, the lid main body portion of the lid portion is so configured that the first and second lid main body portions are coupled via the lid side hinge portion, but the main body side hinge portion and the lid side hinge portion are provided at the positions displaced in the extending direction of the base (particularly bottom) plate portion with the protector main body portion and/or the lid portion united. The specified bent shape part is formed at the position of one of the base (particularly bottom) plate portion and the lid main body portion corresponding to the main body side hinge portion or the lid side hinge portion provided on the other of the base (particularly bottom) plate portion and the lid main body portion, and the pair of auxiliary side wall portions for closing the clearances formed between the pair of first side wall portions and the pair of second side wall portions are formed on the substantially opposite side parts of the lid main body portion. Thus, the clearances formed between the pair of first side wall portions and the pair of second side wall portions can be at least partly closed by the pair of auxiliary side wall portions. In this way, the clearances formed at the side wall portions at the position corresponding to the main body side hinge portion can be at least partly closed when the protector main body portion is provided with the main body side hinge portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view showing a wiring module with protector according to an embodiment,
FIG. 2 is an exploded perspective view of the wiring module with protector,
FIG. 3 is a partial perspective view of the wiring module with protector,
FIG. 4 is a perspective view showing a protector main body portion,
FIG. 5 is a perspective view showing the protector main body portion,
FIG. 6 is a perspective view showing an outer lid portion,
FIG. 7 is a perspective view showing the outer lid portion,
FIG. 8 is a perspective view showing an inner lid portion,
FIG. 9 is a perspective view showing the inner lid portion, and
FIG. 10 is a view showing a protector according to a modification.

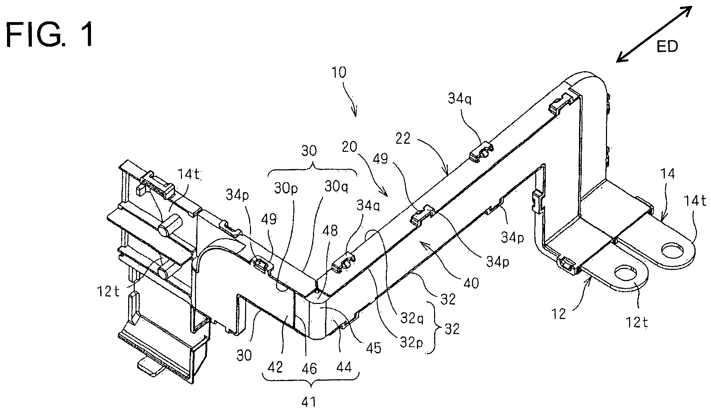

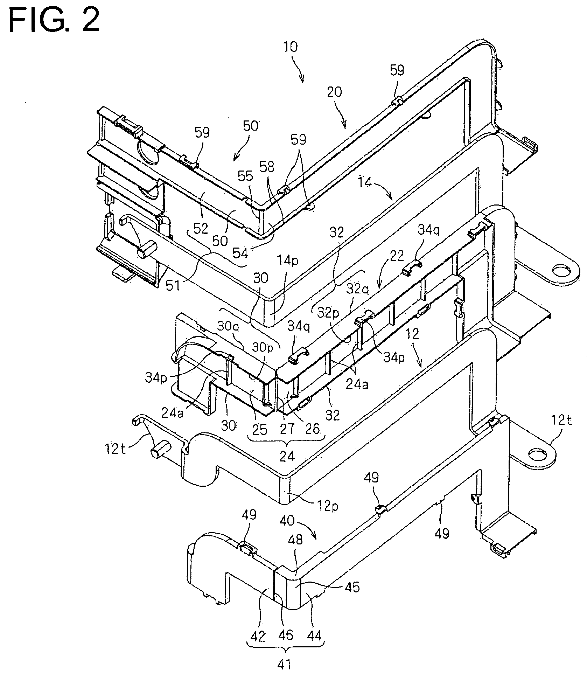

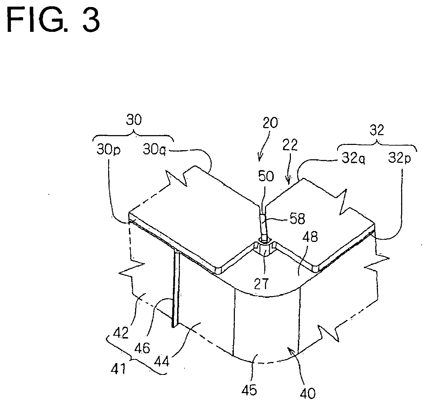

Hereinafter, a wiring module with protector and a protector according to a particular embodiment are described. FIG. 1 is a perspective view showing a wiring module with protector 10, FIG. 2 is an exploded perspective view of the wiring module with protector 10 and FIG. 3 is a partial perspective view of the wiring module with protector 10.

The wiring module with protector 10 includes one or more conductors (particularly bare conductors) 12, 14 and a protector 20.

The bare conductors 12, 14 are wiring members for electrically connecting various electrical components (e.g. battery, inverter, motor) in a vehicle. The bare conductor 12, 14 is in the form of a thin strip and formed with connecting end parts 12t, 14t for connection to other electrical devices on one or more intermediate parts thereof and/or on substantially opposite end parts thereof. An intermediate part of the bare conductor 12, 14 in an extending direction ED is bent into a shape substantially corresponding to or adapted to or reflecting a routing path in the vehicle. Here, the intermediate part of the bare conductor 12, 14 in the extending direction ED specifically is bent in a thickness direction thereof at one or more (e.g. two) positions, and an intermediate part (particularly between the two bent positions in the thickness direction) is bent in a width direction. The bare conductor 12, 14 particularly is bent at an angle different from 0° or 180°, preferably substantially at a right angle in one bent part 12P, 14P in the thickness direction. In this embodiment, description is centered on a part of the protector 20 for accommodating these bent parts 12P, 14P.

Here, the bare conductor 12, 14 particularly is formed by press-molding a metal plate material such as copper, copper alloy, aluminum or aluminum alloy into a shape substantially corresponding to the routing path in the vehicle. The bare conductor 12, 14 itself is a conductor whose conductive part particularly is at least partly exposed to outside without being coated. Such a bare conductor 12, 14 is also called a busbar. This bare conductor 12, 14 is insulated from outside by being accommodated into the protector 20.

Of course, the wiring members to be at least partly accommodated into the protector 20 need not be the bare conductors 12, 14 and may be insulated wires or the like whose outer periphery is coated.

Out of the bare conductors 12, 14, the bare conductor 12 particularly is a member to be at least partly accommodated into an outer side of the bent protector 20 and/or the bare conductor 14 particularly is a member to be at least partly accommodated into an inner side of the protector 20. The bare conductors 12, 14 particularly are formed into the substantially same shape bent substantially at the substantially same positions except for differences due to a difference in the path caused by the passage through the outer side or inner side of the protector 20, a difference in draw-out positions of the end parts, and the like.

The protector 20 includes a protector main body portion 22, one or more, particularly a pair of outer lid portions 40 and/or one or more, particularly a pair of inner lid portions 50. The protector 20 is formed into a long shape bent at the respective bent parts of the bare conductors 12, 14.

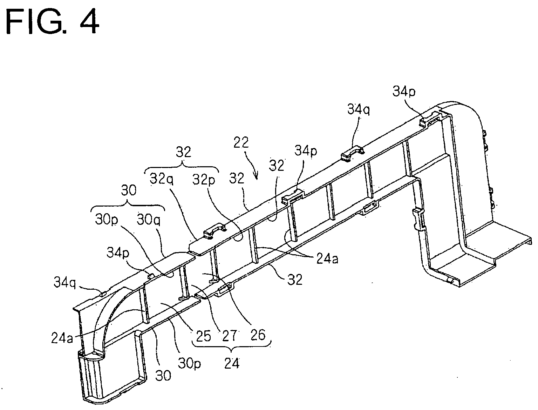

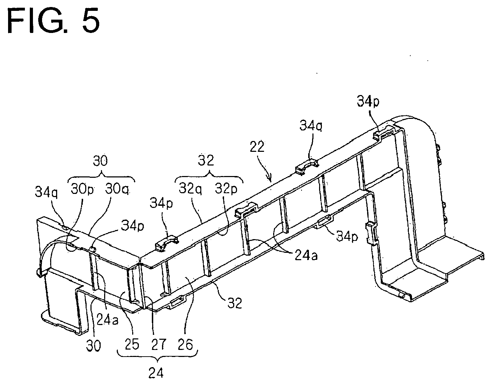

FIGS. 4 and 5 are perspective views showing the protector main body portion 22. FIG. 4 shows a state before the protector main body portion 22 is bent at main body side hinge portion 27, and FIG. 5 shows a state where the protector main body portion 22 is bent at the main body side hinge portion 27.

As shown in FIGS. 1 to 5, the protector main body portion 22 is a member integrally or unitarily molded e.g. of resin or the like and includes a bottom plate portion 24 (as a particular base plate portion), one or more first side wall portions 30 and/or one or more second side wall portions 32.

The bottom plate portion 24 particularly includes a first bottom plate portion 25, a second bottom plate portion 26 and/or a main body side hinge portion 27.

The first bottom plate portion 25 particularly substantially is in the form of a thin strip extending in a shape substantially corresponding to parts of the bare conductors 12, 14 closer to one end side than the bent parts 12P, 14P. Here, the first bottom plate portion 25 particularly substantially is formed into a thin strip shape bent in the width direction at an intermediate part in an extending direction thereof.

The second bottom plate portion 26 particularly substantially is in the form of a thin strip extending in a shape corresponding to the parts of the bare conductors 12, 14 closer to the other end or an one end side than the bent parts 12P, 14P. Here, the second bottom plate portion 26 particularly substantially is formed into a thin strip shape bent in the width direction at an intermediate part in an extending direction thereof and bent in the thickness direction thereof at another position.

Widths of the first and second bottom plate portions 25, 26 particularly are set substantially equal to or larger (slightly larger) than widths of the bare conductors 12, 14 particularly in most parts. Of course, at an outer end part of the second bottom plate portion 26, the width of the second bottom plate portion 26 particularly is set to be about the same as the sum of the widths of the bare conductors 12, 14 since the bare conductors 12, 14 are drawn out to outside at positions different in the width direction thereof.

Note that the first and second bottom plate portions 25, 26 particularly are formed with one or more rib portions 24a in the form of thin projections.

One end part of the first bottom plate portion 25 and one end part of the second bottom plate portion 26 particularly are coupled via the main body side hinge portion 27. The main body side hinge portion 27 particularly substantially is a linear part formed to be thinner than the first and second bottom plate portions 25, 26 and easily bendable. That is, the main body side hinge portion 27 is formed to be continuously connected to the first and second bottom plate portions 25, 26.

This main body side hinge portion 27 particularly is provided at a position substantially corresponding to the bent parts 12P, 14P of the bare conductors 12, 14. Specifically, with the bare conductors 12, 14 at least partly accommodated in the protector 20, the bent part 12P is arranged on an outer corner side of the main body side hinge portion 27 and/or the bent part 14P is arranged on an inner corner side of the main body side hinge portion 27.

The one or more, particularly the pair of first side wall portions 30 are formed to substantially project toward at least one principal surface side of the first bottom plate portion 25 particularly on substantially opposite side parts of the first bottom plate portion 25. Here, to accommodate the bare conductors 12, 14 as described above, each of the pair of first side wall portions 30 include a part 30p projecting outwardly, i.e. substantially toward one principal surface of the first bottom plate portion 25 and a part 30q projecting inwardly, i.e. substantially toward the other principal surface of the first bottom plate portion 25 with the first and second bottom plate portions 25, 26 bent at the main body side hinge portion 27. Thus, an accommodation space for the bare conductor 12 at least partly enclosed by the first bottom plate portion 25 and the parts 30p of the one or more, particularly the pair of first side wall portions 30 is formed on the one principal surface side of the first bottom plate portion 25, and/or an accommodation space for the bare conductor 14 at least partly enclosed by the first bottom plate portion 25 and the parts 30q of the one or more, particularly the pair of first side wall portions 30 is formed on the other principal surface side of the first bottom plate portion 25.

Further, the one or more, particularly the pair of second side wall portions 32 are formed to project in the substantially same projecting direction as the first side wall portion(s) 30 from the second bottom plate portion 26 on (particularly substantially opposite side parts of) the second bottom plate portion 26. Here, to accommodate the bare conductors 12, 14, each of the pair of second side wall portions 32 include a part 32p projecting outwardly, i.e. toward the one principal surface of the second bottom plate portion 26 and a part 32q projecting inwardly, i.e. toward the other principal surface of the second bottom plate portion 26 with the second and second bottom plate portions 25, 26 bent at the main body side hinge portion 27. Thus, an accommodation space for the bare conductor 12 at least partly enclosed by the second bottom plate portion 26 and the part(s) 32p of the one or more, particularly the pair of second side wall portions 32 is formed on the one principal surface side of the second bottom plate portion 26, and an accommodation space for the bare conductor 14 at least partly enclosed by the second bottom plate portion 26 and the part(s) 32q of the one or more, particularly the pair of second side wall portions 32 are formed on the other principal surface side of the second bottom plate portion 26.

The one or more, particularly the pair of first side wall portions 30 and the one or more, particularly the pair of second side wall portions 32 particularly are separated at opposite sides of an extension of the main body side hinge portion 27. In a state where the first and second bottom plate portions 25, 26 are present on the substantially same plane, a clearance extending with the same width is formed between the parts 30p of the pair of first side wall portions 30 and the parts 32p of the pair of second side wall portions 32, and/or a (particularly substantially V-shaped) clearance extending from the main body side hinge portion 27 is formed between the parts 30q of the pair of first side wall portions 30 and the parts 32q of the pair of second side wall portions 32. The (particularly substantially V-shaped) clearance particularly substantially is open at 90°.

When the first and second bottom plate portions 25, 26 are bent at an angle different from 0° or 180°, preferably substantially at a right angle, a (particularly substantially V-shaped) clearance is formed between the parts 30p of the pair of first side wall portions 30 and the parts 32p of the pair of second side wall portions 32. This V-shaped clearance is open at an angle different from 0° or 180°, preferably substantially at 90° from the main body side hinge portion 27. Conversely to this, the clearances between the parts 30q of the pair of first side wall portions 30 and the parts 32q of the pair of second side wall portions 32 are closed and the parts 30q and the parts 32p are in contact or tiny clearances are formed therebetween.

Note that side wall portions are formed on one side part and a widthwise central part on one principal surface of the outer end part of the second bottom plate portion 26, and side wall portions are formed on the other side part and the widthwise central part on the other principal surface of the outer end part of the second bottom plate portion 26. This causes the connecting end parts 12t, 14t of the bare conductors 12, 14 to be at least partly accommodated at positions different in the width direction thereof and drawn out to outside.

Further, one or more lock portions 34p for fixing the outer lid portion 40 are formed on outward facing surface(s) of the part(s) 30p of (the pair of) first side wall portion(s) 30 and/or the part(s) 32p of (the pair of) second side wall portion(s) 32, and one or more lock portions 34q for fixing the inner lid portion 50 are formed on outward facing surface(s) of the part(s) 30q of (the pair of) first side wall portion(s) 30 and/or the part(s) 32q of (the pair of) second side wall portion(s) 32. The lock portions 34p, 34q particularly are projection-like lock protrusions or lock receiving portions including holes for retaining and locking projection-like lock portions.

As just described, the protector main body portion 22 can be easily integrally or unitarily molded by being configured to be bent at the main body side hinge portion 27. Specifically, in the state where the first and second bottom plate portions 25, 26 are present on the substantially same plane, the first side wall portion(s) 30, the second side wall portion(s) 32 and the lock portion(s) 34p, 34q have shapes specified by planarly or linearly observable surfaces when viewed in directions approximately orthogonal to the first and second bottom plate portions 25, 26. Thus, if both directions at an angle different from 0° or 180°, preferably substantially orthogonal to the first and second bottom plate portions 25, 26 are mold-releasing directions during molding, undercut parts can be maximally reduced. Therefore, the protector main body portion 22 can be easily integrally or unitarily molded.

In accommodating the bare conductors 12, 14 including the bent parts 12P, 14P, the bare conductors 12, 14 can be at least partly accommodated by bending the first and second bottom plate portions 25, 26 at the main body side hinge portion 27.

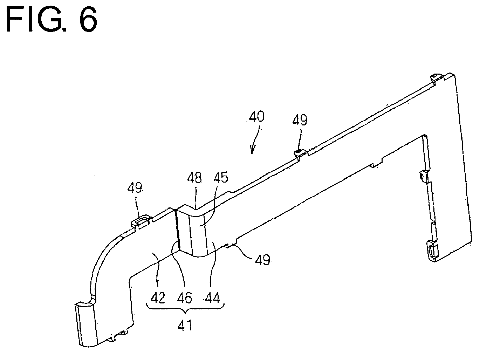

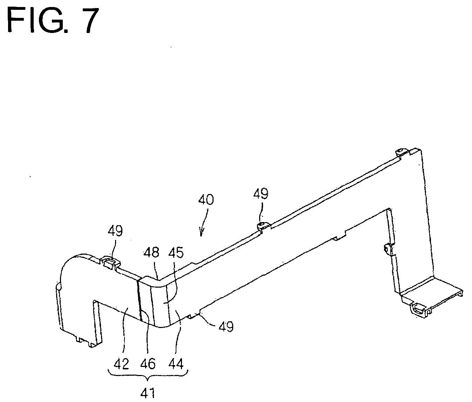

FIGS. 6 and 7 are perspective views showing the outer lid portion 40. FIG. 6 shows a state where the outer lid portion 40 is bent at a lid side hinge portion 46 and FIG. 7 shows a state where the outer lid portion 40 is extended straight at the lid side hinge portion 46.

As shown in FIGS. 1 to 3, 6 and 7, the outer lid portion 40 particularly is a member integrally or unitarily molded of resin or the like and includes a lid main body portion 41 including a first lid main body portion 42, a second lid main body portion 44 and the lid side hinge portion 46.

The first lid main body portion 42 particularly substantially is in the form of a long and narrow plate substantially corresponding to a part of the first bottom plate portion 25 closer to the outer end part than the main body side hinge portion 27.

The second lid main body portion 44 particularly substantially is in the form of a long and narrow plate substantially corresponding to a part of the first bottom plate portion 25 near the main body side hinge portion 27 and/or the second bottom plate portion 26. Note that an outer end part of the first lid main body portion 42 particularly is shaped to substantially correspond to a part between the pair of side wall portions on the outer end part of the second bottom plate portion 26. A part of the second lid main body portion 44 substantially corresponding to the main body side hinge portion 27 (part to be arranged in the main body side hinge portion 27 in a state mounted on the protector main body portion 22 as described later) particularly is formed into a bent shape part 45 having a specified (predetermined or predeterminable) shape bent in a thickness direction thereof. Here, the bent shape part 45 is formed into a shape bent at an angle different from 0° or 180°, preferably substantially at 90°.

The first and second lid main body portions 42, 44 particularly are set to have the same widths as those of the first and second bottom plate portions 25, 26.

One end part of the first lid main body portion 42 and one end part of the second lid main body portion 44 particularly are coupled via the lid side hinge portion 46. The lid side hinge portion 46 particularly substantially is a linear part formed to be thinner than the first and second lid main body portion 42, 44 and easily bendable. That is, the lid side hinge portion 46 is formed to be continuously connected to the first and second lid main body portions 42, 44.

Since the bent shape part 45 is arranged in the main body side hinge portion 27 and the lid side hinge portion 46 is provided at a position distant from the main body side hinge portion 27 toward the first bottom plate portion 25, the lid side hinge portion 46 is arranged at the position displaced from the main body side hinge portion 27.

The first and second lid main body portions 42, 44 can at least partly close an opening between the pair of first side wall portions 30 and/or an opening between the pair of second side wall portions 32 at positions distant from the first and second bottom plate portions 25, 26.

Further, one or more, particularly a pair of auxiliary side wall portions 48 are provided on (particularly substantially opposite side parts of) the bent shape part 45. The one or more auxiliary side wall portions 48 are formed to project substantially toward an inner corner side from side edge parts of the bent shape part 45 that is continuous while forming an angle. Projecting distance(s) of the auxiliary side wall portion(s) 48 is/are preferably about the same as those of the first and second side wall portions 30, 32. Further specifically, a distance between the outer surfaces of the pair of auxiliary side wall portions 48 is preferably set equal to distances between the inner surfaces of the first side wall portions 30 and between the inner surfaces of the pair of second side wall portions 32.

Further, one or more lock portions 49 lockable to the lock portion(s) 34p are provided to project on (particularly substantially opposite side parts of) the first lid main body portion 42 and/or (particularly substantially opposite side parts of) the second lid main body portion 44.

With the first and second bottom plate portions 25, 26 bent at the main body side hinge portion 27, the lock portion(s) 49 particularly is/are locked and fixed to the lock portion(s) 34p and the outer lid portion 40 is mounted on the protector main body portion 22. The first and second lid main body portions 42, 44 are arranged substantially along the first and second bottom plate portions 25, 26 and/or substantially extend straight by the first bottom plate portion 25 at the lid side hinge portion 46. Further, the one or more, particularly the pair of auxiliary side wall portions 48 are arranged at inner side(s) of the part(s) 30p of (the pair of) first side wall portion(s) 30 of the first bottom plate portion 25 and/or the part(s) 32p of (the pair of) second side wall portion(s) 32 of the second bottom plate portion 26 to at least partly (particularly substantially fully) close the clearance(s) between the part(s) 30p and/or between the part(s) 32p. Note that the pair of auxiliary side wall portions 48 particularly may be arranged at outer sides of the parts 30p of the pair of first side wall portions 30 and the parts 32p of the pair of second side wall portions 32.

As just described, the outer lid portion 40 can be easily integrally or unitarily molded by being configured to be bent at the lid side hinge portion 46. Specifically, in a state where the first and second lid main body portions 42, 44 are bent at an angle different from 0° or 180°, preferably substantially at a right angle via the lid side hinge portion 46, most parts of the first and second lid main body portions 42, 44 substantially extend along the same plane direction and the bent shape part 45, the auxiliary side wall portions 48, the lock portions 49 and the like have shapes specified by planarly or linearly observable surfaces when viewed in directions approximately orthogonal to surfaces thereof. Thus, if both directions orthogonal to the first and second lid main body portions 42, 44 specifically are mold-releasing directions during molding, undercut parts can be maximally reduced. Therefore, the outer lid portion 40 can be easily integrally or unitarily molded.

In mounting the outer lid portion 40 on the protector main body portion 22, the outer lid portion 40 can be mounted on the bent protector main body portion 22 by arranging the bent shape part 45 in the main body side hinge portion 27 and substantially extending the lid side hinge portion 46 straight.

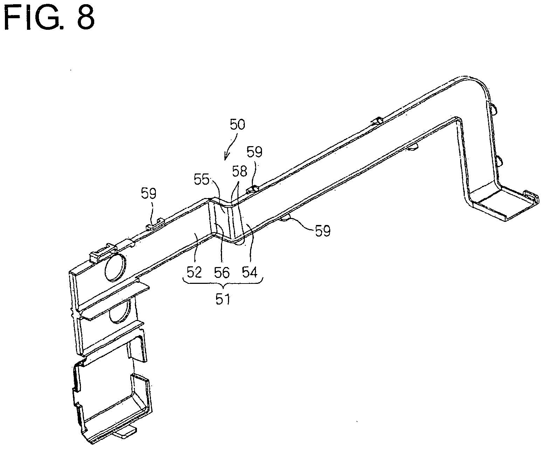

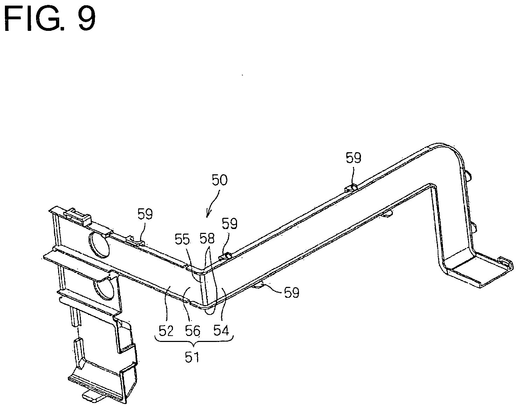

FIGS. 8 and 9 are perspective views showing the inner lid portion 50. FIG. 8 shows a state where the inner lid portion 50 is bent at a lid side hinge portion 56 and FIG. 9 shows a state where the inner lid portion 50 is extended straight at the lid side hinge portion 56.

As shown in FIGS. 1 to 3, 8 and 9, the inner lid portion 50 is a member integrally or unitarily molded of resin or the like and includes a lid main body portion 51 including a first lid main body portion 52, a second lid main body portion 54 and the lid side hinge portion 56.

The first lid main body portion 52 particularly substantially is in the form of a long and narrow plate substantially corresponding to a part of the first bottom plate portion 25 closer to the outer end part than the main body side hinge portion 27. Note that an end lid portion for at least partly covering the connecting end parts 12t, 14t of the bare conductors 12, 14 particularly is formed on an outer end part of the first lid main body portion 52.

The second lid main body portion 54 particularly substantially is in the form of a long and narrow plate substantially corresponding to a part of the first bottom plate portion 25 near the main body side hinge portion 27 and the second bottom plate portion 26. Note that an outer end part of the first lid main body portion 52 particularly is shaped to substantially correspond to a part between the pair of side wall portions on the outer end part of the other principal surface of the second bottom plate portion 26. A part of the second lid main body portion 54 substantially corresponding to the main body side hinge portion 27 (part to be arranged in the main body side hinge portion 27 in a state mounted on the protector main body portion 22 as described later) particularly is formed into a specified (predetermined or predeterminable) bent shape part 55 bent in a thickness direction thereof. Here, the bent shape part 55 is formed into a shape bent at an angle different from 0° or 180°, preferably substantially at 90°.

The first and second lid main body portions 52, 54 particularly substantially are set to have the same widths as those of the first and second bottom plate portions 25, 26.

One end part of the first lid main body portion 52 and one end part of the second lid main body portion 54 particularly are coupled via the lid side hinge portion 56. The lid side hinge portion 56 particularly is a linear part formed to be thinner than the first and second lid main body portion 52, 54 and/or easily bendable. That is, the lid side hinge portion 56 particularly is formed to be continuously connected to the first and second lid main body portions 52, 54.

Since the bent shape part 55 particularly is arranged in the main body side hinge portion 27 and the lid side hinge portion 56 particularly is provided at a position distant from the main body side hinge portion 27 toward the first bottom plate portion 25, the lid side hinge portion 56 is arranged at the position displaced from the main body side hinge portion 27.

The first and second lid main body portions 52, 54 can at least partly close the opening between the pair of first side wall portions 30 and the opening between the pair of second side wall portions 32 at positions distant from the first and second bottom plate portions 25, 26.

Further, one or more, particularly a pair of auxiliary side wall portions 58 particularly are provided on (particularly substantially opposite side parts of) the bent shape part 55. The auxiliary side wall portion(s) 58 particularly is/are formed to project substantially toward an outer corner side from side edge part(s) of the bent shape part 55 that is continuous while forming an angle. Projecting distance(s) of the auxiliary side wall portion(s) 58 is/are preferably about the same as those of the first and second side wall portions 30, 32. Further, a distance between the outer surfaces of the pair of auxiliary side wall portions 58 is preferably set substantially equal to distances between the inner surfaces of the first side wall portions 30 and between the inner surfaces of the pair of second side wall portions 32. Note that although a pair of side wall portions are formed entirely on opposite side parts of the first and second lid main body portions 52, 54 in extending directions on the inner lid portion 50, this is not essential.

Further, one or more lock portions 59 lockable to the lock portions 34q are provided to project on (particularly substantially opposite side parts of) the first lid main body portion 52 and/or (particularly substantially opposite side parts of) the second lid main body portion 54.

With the first and second bottom plate portions 25, 26 bent at the main body side hinge portion 27, the lock portions 59 particularly are locked and fixed to the lock portions 34q and the inner lid portion 50 is mounted on the protector main body portion 22. The first and second lid main body portions 52, 54 are arranged along the first and second bottom plate portions 25, 26 and substantially extended straight by the first bottom plate portion 25 at the lid side hinge portion 56. Further, the one or more, particularly the pair of auxiliary side wall portions 58 are arranged at inner side(s) of the part(s) 30q of (the pair of) first side wall portion(s) 30 of the first bottom plate portion 25 and/or the part(s) 32q of (the pair of) second side wall portion(s) 32 of the second bottom plate portion 26 to at least partly close the clearance(s) between the part(s) 30q and between the part(s) 32q. Note that the pair of auxiliary side wall portions 58 may be arranged at outer sides of the parts 30q of the pair of first side wall portions 30 and the parts 32q of the pair of second side wall portions 32.

As just described, the inner lid portion 50 can be easily integrally or unitarily molded by being configured to be bent at the lid side hinge portion 56. Specifically, in a state where the first and second lid main body portions 52, 54 are bent at an angle different from 0° or 180°, preferably substantially at a right angle via the lid side hinge portion 56, most parts of the first and second lid main body portions 52, 54 substantially extend along the same plane and the bent shape part 55, the auxiliary side wall portions 58, the lock portions 59 and the like have shapes specified by planarly or linearly observable surfaces when viewed in directions approximately orthogonal to those. Thus, if both directions orthogonal to the first and second lid main body portions 52, 54 are mold-releasing directions during molding, undercut parts can be maximally reduced. Therefore, the inner lid portion 50 can be easily integrally or unitarily molded.

In mounting the inner lid portion 50 on the protector main body portion 22, the inner lid portion 50 can be mounted on the bent protector main body portion 22 by arranging the bent shape part 55 in the main body side hinge portion 27 and extending the lid side hinge portion 56 straight.

A method for manufacturing the above wiring module with protector 10 is described.

First, the protector main body portion 22, the outer lid portion 40 and the inner lid portion 50 are molded. At this time, the protector main body portion 22 can be easily integrally or unitarily molded since the first and second bottom plate portions 25, 26 particularly substantially extend straight via the main body side hinge portion 27. The outer lid portion 40 and the inner lid portion 50 can be respectively easily integrally or unitarily molded since the first lid main body portions 42, 52 and the second lid main body portions 44, 54 are bent at an angle different from 0° or 180°, preferably substantially at a right angle at the lid side hinge portions 46, 56.

The first and second bottom plate portions 25, 26 are bent at an angle different from 0° or 180°, preferably substantially at a right angle at the main body side hinge portion 27. In this state, the bare conductor 12 at least partly is arranged in the space enclosed by the first and second bottom plate portions 25, 26, the parts 30p of the pair of first side wall portions 30 and the parts 32p of the pair of second side wall portions 32. Thereafter, the lock portion(s) 49 is/are locked to the lock portion(s) 34p and/or the outer lid portion 40 is mounted on the protector main body portion 22. At this time, the clearance(s) between the part(s) 30p of (the pair of) first side wall portion(s) 30 and/or between the part(s) 32p of (the pair of) second side wall portion(s) 32 formed by bending at the main body side hinge portion 27 are closed by (the pair of) auxiliary side wall portion(s) 48.

Further, the bare conductor 14 particularly at least partly is arranged in the space enclosed by the first and second bottom plate portions 25, 26, the parts 30q of the pair of first side wall portions 30 and the parts 32q of the pair of second side wall portions 32. Thereafter, the lock portion(s) 59 is/are locked to the lock portion(s) 34q and/or the inner lid portion 50 is mounted on the protector main body portion 22. At this time, specifically, the clearances between the parts 30q of the pair of first side wall portions 30 and between the parts 32q of the pair of second side wall portions 32 formed by bending at the main body side hinge portion 27 are closed by the pair of auxiliary side wall portions 58.

According to the wiring module with protector 10 and the protector 20 configured as described above, the bottom plate portion 24 of the protector main body portion 22 particularly is so configured that the first and second bottom plate portions 25, 26 are coupled via the main body side hinge portion 27. Thus, the protector main body portion 22 can be easily integrally or unitarily molded.

Further, if the above configuration is adopted, the pair of first side wall portions 30 on the opposite side parts of the first bottom plate portion 25 and the pair of second side wall portions 32 of the second bottom plate portion 26 particularly are separated and the clearances are formed therebetween.

On the other hand, for the outer lid portion 40 and the inner lid portion 50, the lid main body portions 41, 51 are so configured that the first lid main body portions 42, 52 and the second lid main body portions 44, 54 are coupled via the lid side hinge portions 46, 56, but the specified (predetermined or predeterminable) bent shape parts 45, 55 are formed on the second lid main body portions 44, 54 and the lid side hinge portions 46, 56 are provided at the positions displaced from the main body side hinge portion 27. The pairs of auxiliary side wall portions 48, 58 are provided on the bent shape part 45, 55 and the clearances formed between (the pair of) first side wall portion(s) 30 and the (pair of) second side wall portion(s) 32 are closed by these one or more, particularly pairs of auxiliary side wall portions 48, 58.

In this way, specifically, the clearances formed between the pair of first side wall portions 30 and the pair of second side wall portions 32 at least partly can be closed at the position corresponding to the main body side hinge portion 27 when the protector main body portion 22 is provided with the main body side hinge portion 27.

Note that the outer lid portion 40 and the inner lid portion 50 can be also easily integrally or unitarily molded since the lid side hinge portions 46, 56 are provided.

Particularly, if the pair of first side wall portions 30 and the pair of second side wall portions 32 include the outwardly projecting parts 30p, 32p with the first and second bottom plate portions 25, 26 bent at the main body side hinge portion 27, clearances are formed also between these parts 30p, 32p. Such clearance(s) can be also closed by the auxiliary side wall portion(s) 48 formed to project toward the inner corner side(s) of (particularly the opposite side parts of) the bent shape part 55 of the outer lid portion 40.

When the pair of first side wall portions 30 and the pair of second side wall portions 32 include the inwardly projecting parts 30q, 32q with the first and second bottom plate portions 25, 26 bent at the main body side hinge portion 27, clearances particularly are also formed between these parts 30q, 32q. Such clearances can be also closed by the auxiliary side wall portions 58 formed to project toward outer corner sides of the opposite side parts of the bent shape part 55 of the inner lid portion 50.

By also using the above configuration, the clearances formed between the pair of first side wall portions 30 and the pair of second side wall portions 32 at the opposite sides specifically can be closed by the auxiliary side wall portions 48, 58 while the bare conductors 12, 14 are accommodated on the opposite sides of the protector main body portion 22.

As just described, in the configuration in which the bare conductors 12, 14 at least partly are accommodated in the protector 20 by at least partly closing the respective clearances by the auxiliary side wall portions 48, 58, the exposure of the bare conductors 12, 14 to outside can be prevented as much as possible.

Note that, in the above embodiment, the pair of first side wall portions and the pair of second side wall portions may project only on the one principal surface of the bottom plate portion and one of the bare conductors 12, 14 and the one of the outer lid portion 40 and the inner lid portion 50 may be omitted.

Further, one or more, particularly a plurality of wiring materials may be accommodated on the one principal surface side of the bottom plate portion 24.

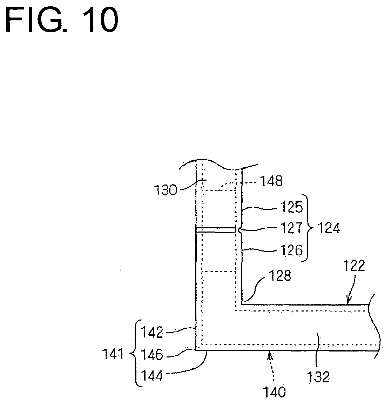

Further, although the outer lid portion 40 and the inner lid portion 50 are formed with the bent shape parts 45, 55 in the above embodiment, a bent shape part 128 may be formed on a protector main body portion 122 corresponding to the protector main body portion 22 as in a modification shown in FIG. 10. That is, although the lid side hinge portions 46, 56 of the outer lid portion 40 and the inner lid portion 50 are displaced from the bent position of the protector 20 in the above embodiment, an example in which a main body side hinge portion 127 of the protector main body portion 127 is displaced from the bent position of the protector is described in this modification.

In this modification, the protector main body portion 122 particularly includes a bottom plate portion 124 (as a particular base plate) having a first bottom plate portion 125 and a second bottom plate portion 126 coupled via the main body side hinge portion 127, one or more, particularly a pair of first side wall portions 130 projecting toward one principal surface side from (particularly substantially opposite side parts of) the first bottom plate portion 125 and/or one or more, particularly a pair of second side wall portions 132 projecting toward the one principal surface side from (particularly substantially opposite side parts of) the second bottom plate portion 126.

The second bottom plate portion 126 particularly is formed with a bent shape part 128 having a specified (predetermined or predeterminable) shape bent at a right angle in a thickness direction thereof. The bent shape part 128 is arranged at a position substantially corresponding to a lid side hinge portion 146 to be described later with the protector main body portion 122 and a lid portion 140 united.

Further, the lid portion 140 particularly includes a lid main body portion 141 having a first lid main body portion 142 and/or a second lid main body portion 144 coupled via the lid side hinge portion 146.

The main body side hinge portion 127 and the lid side hinge portion 146 particularly are provided at positions displaced in an extending direction of the bottom plate portion 124 with the protector main body portion 122 and the lid portion 140 united. Here, the lid side hinge portion 46 is arranged in the bent shape part 128.

Further, one or more, particularly a pair of auxiliary side wall portions 148 for preventing one or more clearances formed between (the pair of) first side wall portion(s) 130 and (the pair of) second side wall portion(s) 132 are formed on (particularly substantially opposite sides of) the lid main body portion 141.Specifically, the pair of auxiliary side wall portions 148 (particularly substantially in the form of rectangular plates) are formed on opposite side parts of the first lid main body portion 142.

Also by this modification, the clearances formed between the pair of first side wall portions 130 and the pair of second side wall portions 132 particularly by forming the protector main body portion 122 with the main body side hinge portion 127 can be at least partly closed by the pair of auxiliary side wall portions 148.

Accordingly, to close clearances formed at side wall portions at a position corresponding to a hinge portion when a protector main body is provided with the hinge portion, a protector 20 includes a protector main body portion 22 and a lid portion (e.g. outer lid portion 40). The protector main body portion 22 including a base (particularly bottom) plate portion 24 having a main body side hinge portion 27 and one or more, particularly one or more, particularly a pair of first side wall portions 30 and one or more, particularly a pair of second side wall portions 32 projecting on (particularly substantially opposite side parts of) the bottom plate portion 24. The lid portion includes, for example, a lid main body portion 41 and a pair of auxiliary side wall portions 48. The lid main body portion 41 is provided with a lid side hinge portion 46 and a specified bent shape part 45. The bent shape part 45 is arranged at a position substantially corresponding to the main body side hinge portion 27 and the lid side hinge portion 46 is arranged at a position displaced form the main body side hinge portion 27. One or more, particularly a pair of auxiliary side wall portions 48 are arranged on (particularly substantially opposite side parts of) the bent shape part 45 to at least partly close one or more clearances formed between the first side wall portion(s) 30 and the second side wall portion(s) 32.

Although this invention has been described in detail above, the above description is illustrative in all aspects and this invention is not limited thereby. It should be understood that unillustrated numerous modifications can be made without departing from the scope of this invention as defined by the claims.

Reference Signs
- 10: wiring module with protector
- 12,14: bare conductor
- 12P, 14P: bent part
- 20: protector
- 22, 122: protector main body portion
- 24, 124: bottom plate portion (base plate portion)
- 25, 125: first bottom plate portion
- 26, 126: second bottom plate portion
- 27, 127: main body side hinge portion
- 30, 130: first side wall portion
- 32, 132: second side wall portion
- 40: outer lid portion
- 41, 51, 141: lid main body portion
- 42, 142: first lid main body portion
- 44, 144: second lid main body portion
- 45, 55: bent shape part
- 46, 56: lid side hinge portion
- 48, 58, 148: auxiliary side wall portion
- 50: inner lid portion
- 128: bent shape part
- 140: lid portion

## Claims

1. A protector (20), comprising:
a protector main body portion (22; 122) including a base plate portion (24; 124) having a first base plate portion (25; 125) and a second base plate portion (26; 126) coupled via a main body side hinge portion (27; 127), a pair of first side wall portions (30; 130) projecting at least toward one principal surface side of the first base plate portion (25; 125) on substantially opposite side parts of the first base plate portion (25; 125), and a pair of second side wall portions (32; 132) separated from the pair of first side wall portions (30; 130) and projecting in the substantially same projecting direction as the first side wall portions (30; 130) on substantially opposite side parts of the second base plate portion (26; 126); and
at least one lid portion (40; 140) including a lid main body portion (41; 51; 141) having a first lid main body portion (42; 142) and a second lid main body portion (44; 144) coupled via a lid side hinge portion (46; 56) and configured to at least partly close an opening between the pair of first side wall portions (30; 130) and an opening between the pair of second side wall portions (32; 132),
wherein:
the main body side hinge portion (27; 127) and the lid side hinge portion (46; 56) are provided at positions displaced in an extending direction of the base plate portion (24; 124) with the protector main body portion (22; 122) and the lid portion (40; 140) united;
a specified bent shape part is formed at a position of one of the base plate portion (24; 124) and the lid main body portion (41; 51; 141) corresponding to the main body side hinge portion (27; 127) or the lid side hinge portion (46; 56) provided on the other of the base plate portion (24; 124) and the lid main body portion (41; 51; 141); and
a pair of auxiliary side wall portions (48; 58; 148) configured to at least partly close clearances formed between the pair of first side wall portions (30; 130) and the pair of second side wall portions (32; 132) are provided on substantially opposite side parts of the lid main body portion (41; 51; 141).

2. A protector according to claim 1, wherein:
the lid main body portion (41; 51; 141) is provided to close the opening between the pair of first side wall portions (30; 130) and the opening between the pair of second side wall portions (32; 132) at a position distant from the base plate portion (24; 124) in a state where the bent shape part (45; 55) is provided on the second lid main body portion (41; 51; 141) and arranged at a position corresponding to the main body side hinge portion and the lid side hinge portion is arranged at a position displaced from the main body side hinge portion; and
the pair of auxiliary side wall portions (48; 58; 148) are provided on substantially opposite side parts of the bent shape part (45; 55) and close the clearances formed between the pair of first side wall portions (30; 130) and the pair of second side wall portions (32; 132) with the base plate portion (24; 124) bent via the main body side hinge portion (27; 127).

3. A protector according to claim 2, wherein:
the pair of first side wall portions (30; 130) and the pair of second side wall portions (32; 132) include parts substantially projecting outwardly with the base plate portion (24; 124) bent at the hinge portion; and
the auxiliary side wall portions (48; 58; 148) are formed to substantially project toward inner corner sides of the substantially opposite side parts of the bent shape part (45; 55).

4. A protector according to claim 2, wherein:
the pair of first side wall portions (30; 130) and the pair of second side wall portions (32; 132) include parts substantially projecting inwardly with the base plate portion (24; 124) bent at the hinge portion; and
the auxiliary side wall portions (48; 58; 148) are formed to substantially project toward outer corner sides of the substantially opposite side parts of the bent shape part (45; 55).

5. A protector according to claim 2, wherein:
the pair of first side wall portions (30; 130) and the pair of second side wall portions (32; 132) include inwardly projecting parts and outwardly projecting parts with the base plate portion (24; 124) bent at the hinge portion;
the lid portion (40; 140) includes an outer lid portion (40) to be arranged on an outer side of the protector main body portion (22; 122) and/or an inner lid portion (50) to be arranged on an inner side of the protector main body portion (22; 122);
the auxiliary side wall portions (48; 58; 148) of the outer lid portion (40) are formed to substantially project toward inner corner sides of the substantially opposite side parts of the bent shape part (45; 55); and/or
the auxiliary side wall portions (48; 58; 148) of the inner lid portion (50) are formed to substantially project toward outer corner sides of the substantially opposite side parts of the bent shape part (45; 55).

6. An assembly of a wiring module (10) with protector (20), comprising:
a protector according to any one of the preceding claims; and
at least one bare conductor (12; 14) at least partly accommodated in a space enclosed by the base plate portion (24; 124), the pair of first side wall portions (30; 130) and the pair of second side wall portions (32; 132) and the lid portion (40; 140).

7. A method of assembling a wiring module (10) with a protector (20), comprising:
providing a protector (20) according to any one of the preceding claims 1 to 5, and
at least partly accommodating at least one bare conductor (12; 14) in a space enclosed by the base plate portion (24; 124), the pair of first side wall portions (30; 130) and the pair of second side wall portions (32; 132) and the lid portion (40; 140).
